# EUROPEAN PATENT APPLICATION

(11) **EP 3 685 960 A1**
(43) Date of publication of application: **29.07.2020**
(21) Application number: 20153111.8
(22) Date of filing: 22.01.2020
(51) Int. Cl.: B23P 19/06, F16B 39/00, F16B 41/00, B05B 13/02, B05C 13/02, B05D 5/08

(54) **A MACHINE AND METHOD FOR PROCESSING SCREWS**

(30) Priority: 23.01.2019 IT 201900000975
(71) Applicant: BB S.p.A., 59100 Prato (IT)
(72) Inventor: Lastrucci, Nicola, 50041 CALENZANO (IT)
(74) Representative: Firmati, Leonardo

(57) **Abstract**

Described is a machine (1) for retaining screws, comprising: retaining means (30) configured for retaining a screw (V) in a processing position wherein a stem (34) of the screw (V) protrudes towards a processing space (L); one or more nozzles (35) positioned adjacent to the processing space (L) and facing the stem (34) of the screw (V), each nozzle (35) is configured for extruding a flow of threadlocker material on the stem (34) of the screw (V) in the processing position; rotation means configured for determining a mutual rotation between the retaining means (30) and the nozzles (35) about a longitudinal axis (A) of the stem (34) of the screw (V) in the processing position.

## Description

This invention relates to a machine and a method for processing screws and, in particular, for applying a threadlocker material on the stem of decorative screws used in the fashion sector.
These screws can be used, for example, in the production of bags, watches or items of clothing, wherein the appearance of the screw is particularly important in determining the value of the finished product.
The use is widespread, in the industrial context, of screws on the threaded part of which are deposited polymer plastic resins in order to obtain a braking effect to avoid loosening of the threaded joint and to ensure the seal of the threaded connection even in the presence of stresses.
The resin is currently applied by hand using a special brush.
Disadvantageously, this application method is costly and not very efficient due to the cost and relative speed of manual operations.
Alternatively, the application can occur by immersing a threaded portion of the screw in a container of resin.
Disadvantageously, this method leads to the formation of "drops" of resin on the stem of the screw which determine an excessive quantity of resin.
Disadvantageously, this aspect can lead to, during application of the screw, a partial escape of the resin which can adversely affect the appearance of the product.
In this context, the technical purpose which forms the basis of the invention is to provide a machine and a method for processing screws which overcome at least some of the above-mentioned drawbacks of the prior art. In particular, the aim of the invention is to provide a machine and a method for processing screws which is able to guarantee an application of a threadlocker material which is efficient, precise and with the correct quantity.

The technical purpose indicated and the aims specified are substantially achieved by a machine and a method for processing screws, comprising the technical features described in one or more of the accompanying claims. The dependent claims correspond to possible embodiments of the invention.
Further features and advantages of the invention are more apparent in the non-limiting description which follows of a preferred embodiment of a machine and a method for processing screws.

The description is set out below with reference to the accompanying drawings which are provided solely for purposes of illustration without restricting the scope of the invention and in which:

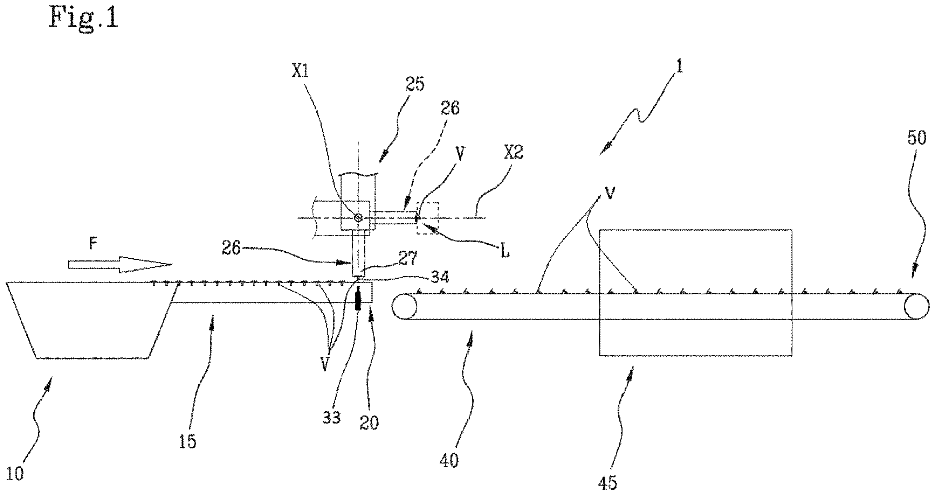

- Figure 1 shows a schematic side view of a machine for processing screws made according to the invention;
- Figure 2 shows a schematic view from above of a detail of the machine of Figure 1.
A machine for processing screws made according to the invention is illustrated in the accompanying drawings and is indicated generically with the reference numeral 1.
It will be referred to below as "machine 1".
The machine 1 comprises a vessel 10 designed for containing screws "V", in particular decorative screws which can be used in the fashion sector.
The machine 1 also comprises an infeed conveyor 15 configured to move a plurality of screws "V" between the vessel 10 and a pick-up station 20.
The infeed conveyor 15 comprises a rail, which in turn has a central slot configured for housing respective stems 34 of the screws "V" during the movement between the vessel 10 and the pick-up station 20 so as to keep the screws "V" oriented vertically, with the respective heads facing upwards according to the configuration of use of the machine 1.
Moreover, the infeed conveyor 15 also comprises vibration means, not illustrated, configured to impart a vibration to the above-mentioned rail to determine a forward movement of the screws "V" along the rail, in the direction of the arrow F.
The rail and the vibration means are configured so as to determine the forward movement of the screws "V" according to an orderly series and in a line and to keep the screws "V" in that configuration at the pick-up station 20, that is to say, with the stem 34 facing downwards.
The machine 1 also comprises movement means 25 which, in the embodiment illustrated, comprise an arm 26 rotatable about a first axis of rotation "X1", from a first pick-up configuration (vertical) to a second processing configuration (horizontal).
The first rotation "X1" is preferably oriented horizontally with respect to the configuration of use of the machine 1.
Moreover, the machine 1 comprises rotation means, not illustrated, acting on an end 27 of the arm 26 for determining a relative rotation about a second axis of rotation "X2", advantageously perpendicular to the first axis of rotation "X1".
The machine 1 according to the invention also comprises retaining means 30 configured for retaining a screw "V".
The retaining means 30 are advantageously installed at the end 27 of the arm 26 and are configured in such a way to retain the screw "V" so that the relative stem 34 is positioned protruding from the arm 26.
According to the embodiment illustrated, the retaining means 30 comprise a concave retaining portion 31 which defines a seat for the head portion of the screw "V" and a pneumatic element 32 acting by suction on the retaining portion 31, in such a way as to constrain the screw "V", in particular the head of the screw "V", to the retaining portion 31.
Moreover, the pneumatic element 32 can be controlled so as to retain and release the screw "V" from the retaining portion 31 in a controlled manner. According to an embodiment not illustrated, the retaining means 30 comprise one or more magnetic elements.

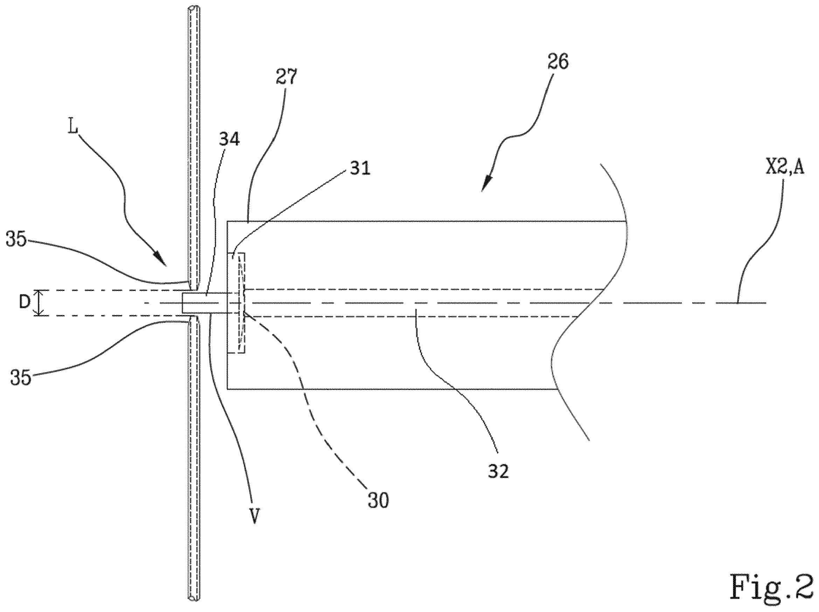

With respect to this embodiment not illustrated, the pneumatic means have the advantage of also operating in the case of screws "V" made of non-ferromagnetic materials.
Advantageously, a further embodiment comprises retaining means 30 both of the pneumatic and magnetic type.
The retaining means 25 are configured for moving the retaining means 30 between the pick-up station 20 and a processing position.
The retaining means 30 are configured in the pick-up station 20 for picking up a respective screw "V" placed there.
The machine 1 comprises a piston 33 positioned beneath the pick-up station 20 and vertically mobile so as to vertically move the screw "V" positioned in the pick-up station 20, to facilitate the relative gripping by the retaining means 30.
The arm 26 is advantageously oriented vertically with respect to the configuration of use of the machine 1 when the retaining means 30 engage the pick-up station 20.
In the processing position the retaining means 30 are configured for placing the stem 34 of the screw "V" so that its protrudes towards a processing space "L".
In the processing position illustrated in Figure 2, the screw "V" has a longitudinal axis "A" oriented horizontally with respect to the configuration of use of the machine 1.
Moreover, the arm 26 is oriented vertically with respect to the configuration of use of the machine 1 when the retaining means 30 are positioned in the processing position.
As illustrated in Figure 2, the machine 1 according to the invention comprises one or more nozzles 35 positioned adjacent to the processing space "L".
The nozzles 35 face towards the processing space "L" and each nozzle 35 is configured for extruding a flow of threadlocker material on the stem 34 of the screw "V" kept in the processing position by the retaining means 30.

The threadlocker material has the aspect of a paste or viscous liquid.
There are advantageously two nozzles 35.
According to the preferred embodiment, the two nozzles 35 are positioned in a mutually opposite position with respect to the stem 34 of the screw "V" so that the respective flows of threadlocker material engage side portions facing each other of the stem 34.
Advantageously, the machine 1 comprises means for adjusting the mutual distance D between the nozzles 35, the means, non illustrated, being configured for allowing the placement of screws "V" having stems 34 with a different diameter in the processing space "L".
The above-mentioned rotation means 26 are configured to determine a mutual rotation between the retaining means 30 and the nozzles 35 about the longitudinal axis "A" of the stem 34 of the screw "V" in the processing position, so as to distribute the threadlocker material uniformly on a side surface of the stem 34 of the screw "V".
In particular, the longitudinal axis "A" coincides with the second axis of rotation "X2" when the retaining means 30 are in the processing position, as illustrated in Figure 2.
According to an embodiment not illustrated, the retaining means 30 keep the screw "V" stationary in the processing position whilst the nozzles 35 rotate about the axis "A" for distributing the threadlocker material on the side surface of the screw "V".
The extent of the rotation about the axis X2 imparted by the rotation means is commensurate with the number of nozzles 35 so a to obtain a uniform distribution of threadlocker material on the stem 34.
In particular, the extent of the rotation is described by the formula 360°/N, where
N is the number of nozzles 35.
Advantageously, the machine 1 comprises an outfeed conveyor 40 configured for receiving the screws "V" from the retaining means 30, by falling following their release at the processing position.

The outfeed conveyor 40 is configured for moving the screws "V" up to an outfeed station 50.
The machine 1 also comprises drying means 45, for example a drying oven, acting on the outfeed conveyor 40 in such a way as to activate the threadlocker material positioned on the stems of the screws "V" directed towards the outfeed station 50.
Lastly, the machine 1 comprises a control unit connected to the movement means 25, to the rotation means and to the retaining means 30 and a meter mounted on the infeed conveyor 15 and connected to the control unit.
The control unit is configured for actuating the movement means 25, the rotation means and the retaining means 30 in coordination with each other following signals received from the meter and indicating the presence of screws "V" at the pick-up station 20.
Another object of the invention a method for retaining screws which can be actuated by means of the machine 1 described above.
The method comprises a preliminary step of preparing a plurality of screws "V", inside the vessel 10.
Subsequently, the method comprises a step of positioning the plurality of screws "V" according to an orderly series wherein each screw "V" is oriented according to a common predetermined orientation, advantageously vertical, with the stem 34 facing downwards, according to the configuration of use of the machine 1 illustrated in the accompanying drawings.
The step of positioning the plurality of screws "V" according to an orderly series comprises the steps of:
- moving the plurality of screws "V" from the vessel 10 to a rail equipped with a central slot, in particular the rail described above with reference to the infeed conveyor 15;
- actuating a vibration of the rail in such a way as to cause alternately a rotation of the screws "V" on the rail according to the common orientation mentioned above, wherein the respective stems 34 are inserted in the slot of the rail, or a falling of the screws "V" in the vessel 10.

Subsequently, the method comprises a step of positioning a screw "V" in a processing position in which a lateral threaded surface of a stem 34 of the screw "V" faces one or more nozzles 35, similar to those described with reference to the machine 1.
The step of positioning a screw "V" in the processing position comprises picking up a screw "V" from the orderly series mentioned above and moving the screw "V" to the processing position.
The step of positioning the screw "V" in the processing position comprises a rotation of the screw "V" about a first axis of rotation "X1".
Moreover, the step of positioning the screws "V" in the processing position is preferably performed by the retaining means 30 and the movement means 25 described above.
Subsequently, the method comprises a step of extruding a flow of threadlocker material through each of the nozzles 35 towards the side surface of the stem 34 of the screw "V" in the processing position.
Simultaneously with the step of extruding the flow of threadlocker material, the method comprises a step of mutually rotating the screw "V" and the nozzles 35 about a longitudinal axis "A" of the stem 34 of the screw "V".
Preferably, the nozzles 35 is kept fixed whilst the screw "V" is rotated about the longitudinal axis "A".
Preferably, the screw "V" is rotated by an angle equal to 360°/N, where N is the number of nozzles 35 uniformly distributed on a circumference around the longitudinal axis "A".
There are advantageously two nozzles 35 and the step of extruding the flow of threadlocker material comprises extruding two flows of threadlocker material starting from two opposite points with respect to the longitudinal axis "A" and the screw "V" is rotated by an angle equal to 180° in order to obtain a uniform distribution of threadlocker material on the stem 34.
Lastly, the method comprises a step of activating the threadlocker material. This latter step comprises moving the plurality of screws "V" to which the threadlocker material has been applied through a drying oven 45.

Preferably, this latter step is performed using the outfeed conveyor 40 and the drying oven 45 described with reference to the machine 1.
The invention achieves the set aim by overcoming the drawbacks of the prior art.
Advantageously, the machine and the method described allow the application of a threadlocker material on screws in an efficient, precise e repeatable manner.

## Claims

1. A machine (1) for processing screws, comprising:
- retaining means (30) configured to retain a screw (V) in a processing position in which a stem (34) of the screw (V) protrudes towards a processing space (L);
- one or more nozzles (35) positioned in a position adjacent to the processing space (L) and facing towards the stem (34) of the screw (V), each nozzle (35) being configured for extruding a threadlocker material on the stem (34) of the screw (V) in the processing position;
- rotation means configured for determining a mutual rotation between the retaining means (30) and the nozzles (35) about a longitudinal axis (A) of the stem (34) of the screw (V) in the processing position, wherein the retaining means (30) comprise a concave retaining portion (31) defining a seat for a head portion of the screw (V) and a pneumatic element (32) acting by suction on the concave retaining portion (31) so as to retain the screw (V) on the concave retaining portion (31) in a controlled manner, the machine (1) also comprising an infeed conveyor (15) configured for moving a plurality of screws (V) between a vessel (10) and a pick-up station (20) and movement means (25) configured for moving the retaining means (30) between the pick-up station (20), wherein the retaining means (30) are positioned vertically and configured picking up a respective screw (V), and the processing position, the infeed conveyor (15) also comprises a rail configured for housing respective stems (34) of the screws (V) during the movement between the vessel 10 and the pick-up station (20) so as to keep the screws (V) oriented vertically; the movement means (25) also comprising an arm (26) rotating about a first axis of rotation (X1), the rotation means acting on an end (27) of the arm (26) for determining a rotation of the end (27) about a second axis of rotation (X2) perpendicular to the first axis of rotation (X1), the retaining means (30) being installed at the end (27) of the arm (26).

2. The machine (1) according to claim 1, wherein the infeed conveyor (15) also comprises vibration means configured to impart a vibration to the rail to determine a forward movement of the screws (V) along the rail.

3. The machine (1) according to any one of the preceding claims, wherein there are two nozzles (35), the two nozzles (35) being mutually opposite the stem (34) of the screw (V), the machine (1) comprising means for adjusting the reciprocal distance (D) between the two nozzles (35).

4. The machine (1) according any one of the preceding claims, comprising:
- a outfeed conveyor (40) configured to receive the screws (V) from the retaining means (30) and for moving the screws (V) to an outfeed station (50), and
- drying means (45) acting on the outfeed conveyor (40) in such a way as to activate the threadlocker material positioned on the stems (34) of the screws (V) directed towards the outfeed station (50).

5. The machine (1) according to any one of the preceding claims, also comprising a piston (33) positioned beneath the pick-up station (20) and vertically mobile so as to vertically move the screw (V) positioned in the pick-up station (20), to facilitate the relative gripping by the retaining means (30).

6. A method for processing screws, comprising the steps of:
- positioning a screw (V) in a processing position in which a lateral threaded surface of a stem (34) of the screw (V) faces one or more nozzles (35);
- extruding a threadlocker material through each of the nozzles (35) towards the lateral surface;
- simultaneously with the step of extruding a threadlocker material, mutually rotating the screw (V) and the nozzles (35) about a longitudinal axis (A) of the stem (34).

7. The method according to claim 6, comprising the following steps:
- preparing a plurality of screws (V);
- positioning the plurality of screws (V) according to an orderly series wherein
each screw (V) is oriented in a vertical position with the stem (34) facing towards the bottom of the machine (1) the step of positioning a screw (V) in the processing position comprising picking up a screw (V) from the orderly series and moving the screw (V) to the processing position.

8. The method according to claim 7, wherein the step of positioning the plurality of screws (V) according to an orderly series comprises the steps of:
- moving the plurality of screws (V) from a vessel (10) to a rail equipped with a central slot;
- determining a vibration of the rail in such a way as to cause alternately a rotation of the screws (V) oriented in a vertical position on the rail wherein the stems (34) of the screws (V) are inserted in the slot or a falling of the screws (V) in the vessel (10) and a forward movement of the screws (V) on the rail.

9. The method according to any one of claims 6 to 8, wherein the step of extruding a threadlocker material through each of the nozzles (35) comprises extruding the threadlocker material from two opposite points relative to the longitudinal axis (A), towards the stem (34) of the screw (V), the step of mutually rotating the screw (V) and the nozzles (35) comprising rotating the screw (V) by 180° about the longitudinal axis (A).

10. The method according to any one of claims 6 to 9, comprising a step of activating the threadlocker material deposited on the stems (34) of the screws (V), the step of activating the threadlocker material comprising the step of moving a plurality of screws (V) through a drying oven.
